# EUROPÄISCHE PATENTSCHRIFT

(11) **EP 1 730 030 B1**
(45) Veröffentlichungstag und Bekanntmachung des Hinweises auf die Patenterteilung: **08.10.2008**
(21) Anmeldenummer: 05707926.1
(22) Anmeldetag: 02.02.2005
(51) Int. Cl.: B63H 21/32, B63G 8/34, B63G 13/02

(54) **VERFAHREN UND EINRICHTUNG ZUR AUSLEITUNG DER ABGASE VON VERBRENNUNGSKRAFTMASCHINEN VON SCHIFFEN IN DAS UMGEBUNGSWASSER DER SCHIFFE**
METHOD AND DEVICE FOR DISCHARGING EXHAUST GASES OF INTERNAL COMBUSTION ENGINES OF BOATS INTO THE WATER SURROUNDING THE BOATS
PROCEDE ET DISPOSITIF POUR EVACUER LES GAZ D'ECHAPPEMENT DE MOTEURS A COMBUSTION INTERNE DE BATEAUX DANS LES EAUX AMBIANTES DESDITS BATEAUX

(30) Priorität: 29.03.2004 DE 102004015795; 27.09.2004 DE 102004046820
(43) Veröffentlichungstag der Anmeldung: 13.12.2006
(73) Patentinhaber: SIEMENS AKTIENGESELLSCHAFT, 80333 München (DE)
(72) Erfinder: ABDEL-MAKSOUD, Moustafa, 14165 Berlin (DE); SCHULZE HORN, Hannes, 45966 Gladbeck (DE); TIGGES, Kay, 21698 Harsefeld (DE)
(86) Internationale Anmeldenummer: PCT/EP2005/050457
(87) Internationale Veröffentlichungsnummer: WO 2005/092702

(56) Entgegenhaltungen:
- DE-B3- 10 314 057
- GB-A- 1 323 871
- US-A- 3 084 651
- US-A- 4 631 032
- US-A1- 2003 119 388

## Beschreibung

Die Erfindung betrifft ein Verfahren zur, insbesondere leistungssteigernden, Ausleitung von Abgasen von Verbrennungskraftmaschinen von U-booren in das Umgebungswasser der U-boore.

Es ist bekannt, die Abgase von Verbrennungskraftmaschinen von Schiffen in das Umgebungswasser der Schiffe einzuleiten, sei es, um einen sichtbaren Ausstoß der Abgase (eine Abgasfahne) zu verhindern oder um eine Austragsmöglichkeit mit Hilfe von vorhandenen Waterjets zu nutzen. Die Austragsmöglichkeit von Abgasen durch die Austrittsöffnung des Waterjetstrahls aus einem Schiffsrumpf ist beispielsweise aus der US-PS 4.979.917 bekannt. Nachteilig ist jedoch dabei, dass die Verbrennungskraftmaschine gegen den hydrostatischen Druck des Wassers als Gegendruck arbeiten muss, also einen Leistungsabfall hat. Dieser Leistungsabfall ist besonders groß, wenn es sich um aufgeladene Dieselmotoren handelt, deren Abgasturbinen sehr gegendruckempfindlich sind. Aus diesem Grund wird das Abgas einer aufgeladenen Verbrennungskraftmaschine gemäß des Vorschlags in der DE 103 14 057 B3 in den Schnorchelmast des U-Boots, in dem die aufgeladene Verbrennungskraftmaschine angeordnet ist, geleitet. Diese Lösung erfordert jedoch einen sehr großen apparativen Aufwand und erhöht den Leistungsbedarf des U-Boots beim Schnorcheln, da der Schnorchelmast entsprechend voluminöser ausgeführt werden muss.

Aus der US-PS 4, 631, 032 die alle Merkmale des Oberbegriffs der Ansprüche 1 und 8 offenbart ist ein Waterjet bekannt, der als Antrieb eines kleinen Bootes dient. In diesem bekannten Waterjet werden die Abgase eines Verbrennungsmotors durch eine Propellerwelle in das Gehäuse des Waterjets eingeleitet, wo sie sich mit einem von unten in das Gehäuse eintretenden Teilstrom des Umgebungswassers vermischen. Anschließend wird das Wasser-Abgas-Gemisch durch eine Austrittsöffnung ausgeleitet, deren Durchmesser geringer ist als der Durchmesser des Gehäuses, in dem der Propeller läuft. Es entsteht ein dynamischer Mischer für Abgas und Wasser mit erhöhter Austrittsgeschwindigkeit des Gas-Wasser-Gemisches. Die Einrichtung ist knapp unter der Wasseroberfläche angeordnet und es findet keine Leistungssteigerung des Verbrennungsmotors durch diese Einrichtung statt.

Es ist Aufgabe der Erfindung, ein Verfahren und eine Einrichtung anzugeben, mit der gegenüber den bisherigen Austragsverfahren von Abgasen von Verbrennungskraftmaschinen aus Über- oder Unterwasserschiffen eine gegenüber dem Stand der Technik erhebliche Leistungssteigerung erreichbar ist. Die Aufgabe wird dadurch gelöst, dass die Abgase in einer dafür bestimmten Einrichtung mit einem dem Umgebungswasser entnommenen Wasserstrom in einem Unterdruckfeld vermischt werden, wobei der Unterdruck des Unterdruckfeldes durch eine Querschnittsverminderung des Wasserstroms vor der Mischung erzeugt wird. Der Wasserstrom wird dabei einfach in einer Pumpe vor der Einrichtung erzeugt.

Durch die Kombination eines Unterdruckfeldes für das Abgas mit einem Mischer für Abgas und Wasser ergibt sich eine überraschend mögliche Leistungssteigerung, die insbesondere bei U-Booten erheblich ist. Für Überwasserfahrzeuge ergibt sich die vorteilhafte Möglichkeit eines Ausbringens der Abgase relativ tief unter der Wasseroberfläche. So wird verhindert, dass die Abgase detektiert werden können, es entsteht also ein sogenanntes "signaturfreies"' Ausbringen von Abgasen aus Schiffen, auch aus U-Booten.

Das "signaturfreie" Ausbringen von Abgasen aus U-Booten ist aus der DE 100 61 487 C1 bekannt. Hier ist jedoch eine erhebliche Fremdenergie notwendig, um den statischen Druck des Umgebungswassers des Schiffes zu überwinden oder es muss ein nicht unerheblicher Leistungsabfall in Kauf genommen werden. Zur Vermeidung sind, wie bereits erwähnt, lange Abgasrohre im oder am Schnorchelmast notwendig.

Das Ausbringen von Abgasen außerhalb eines Schiffskörpers unter Wasser ist an sich bekannt, so z.B. aus der WO 93/07053. Hier erfolgt aber keine Vermischung, sondern es entstehen zwei Mengenströme, die ungemischt parallel verlaufen, wobei die entsprechende Einrichtung nur relativ wenig unter Wasser liegen darf. Es sind auch weitere Unterwasser-Ausbringungseinrichtungen für Abgase bekannt, so z.B. aus der JP-2001/239995 A, die, wie viele ähnliche Lösungen, einen Ejektor für Abgase zeigt. Ein derartiger Ejektor benötigt eine erhebliche Fremdenergie und führt nicht zu der gewünschten Vermischung von Abgas und Wasser, da der hoch beschleunigte, dichte Wasserstrahl sich nicht mit dem coaxial zugeführten Gas mischt und nahezu unverändert in das Umgebungswasser des Schiffes eintritt, ohne das Gas wirklich zu fördern.

Die vorstehend geschilderten Nachteile werden durch das erfindungsgemäße Verfahren in Anspruch 1 und die erfindungsgemäße Einrichtung in Anspruch 8 vermieden.

In der Erfindung ist dabei vorgesehen, dass die Querschnittsverminderung des Wasserstroms derart erfolgt, dass ein beschleunigter Wasserstrom in Form eines Hohlzylinders gebildet wird und dass die Abgase in das Innere des Hohlzylinder-Wasserstroms eingeführt werden. So ergibt sich ein sicherer Fördereffekt für das Gas, der vorteilhaft im Zusammenwirken mit der Auflösung der Ringstruktur des Wasserstroms in kurzer Entfernung hinter der Mischeinrichtung zu einem Zweiphasengemisch Abgas/Wasser führt, das nicht mehr detektiert werden kann.

In weiterer Ausgestaltung der Erfindung ist vorgesehen, dass die Abgase auch auf die Außenseite des Hohlzylinder-Wasserstroms geführt werden. Diese Ausbildung des Verfahrens ist besonders vorteilhaft, wenn es sich um sehr große Abgasströme handelt, also z.B. wenn die Verbrennungskraftmaschine eine Gasturbine ist.

In der Erfindung ist vorgesehen, dass der Hohlzylinder-Wasserstrom in eine rotierende Bewegung versetzt wird, z.B. durch Drallerzeugungsmittel, wie etwa Schaufeln. Auch wird das Abgas in eine, dem Hohlzylinder-Wasserstrom entgegengesetzt verlaufende, Rotationsbewegung versetzt, z.B. ebenfalls durch Drallerzeugungsmittel, wie Schaufeln. Hierdurch ergibt sich die Möglichkeit, das gewünschte Zweiphasengemisch auf sehr kurzem Durchlaufweg durch ein Leitrohr an oder auf dem Schiff zu erzeugen. Darüber hinaus wird eine besonders feine und gleichmäßige Verteilung des Abgases im Wasser erreicht, im Idealfall sogar ein homogenes Gemisch.

In Ausgestaltung der Erfindung ist dabei vorgesehen, dass der Abgasstrom in die Form eines Hohlzylinders gebracht wird, z.B. durch einen Verdrängungskörper im Abgasstrom. So kann vorteilhaft erreicht werden, dass innerhalb der Mischeinrichtung eine rückströmungsfreie Axialdurchströmung stattfindet, wie sie für die Mischung und Unterdruckerzeugung vorteilhaft ist.

In weiterer Ausgestaltung der Erfindung ist vorgesehen, dass das Abgas zur Volumenverringerung vor der Einführung in das Unterdruckfeld auf unter 100 Grad C gekühlt wird, z.B. durch Wassereinspritzung. Durch diese bei Marineschiffen an sich bekannte Maßnahme kann das Gasvolumen soweit vermindert werden, dass mit auf U-Booten üblichen Rohrdurchmessern für die Einrichtung gearbeitet werden kann, z.B. mit einem Außendurchmesser von 250 mm. Gleichzeitig wird sehr vorteilhaft verhindert, dass sich ein schwierig zu beherrschendes Dreiphasengemisch, z.B. aus Abgas, Dampf und Wasser, bildet.

In weiterer Ausgestaltung der Erfindung ist vorgesehen, dass das Abgas im Anschluss an die Mischung mit dem Wasserstrom und nach Passieren des Unterdruckfeldes eine Drucksteigerung erfährt, z.B. in einem erweiterten Abgasaustrittsrohr mit Diffusoreffekt. Hinter dem erfindungsgemäß verwendeten Verdrängungskörper in der Einrichtung ergibt sich bereits ein erheblicher, meist ausreichend drucksteigernder, Diffusoreffekt. Anforderungsgerecht kann dieser ggf. durch eine einfache Nacherweiterung des Gemisch-Austrittsrohres noch weiter gesteigert werden. Abgasaustrittstiefen über 5 m hinaus sind so erreichbar.

Zur Durchführung des Verfahrens nach Anspruch 1 bis 7 zur Ausleitung von Abgasen von Verbrennungskraftmaschinen von U-booren in das Umgebungswasser der U-boore ist eine Einrichtung vorgesehen, die als Abgas-Wasser-Mischer ausgebildet ist und eine Unterdruckkammer aufweist. So ist vorteilhaft die leistungssteigernde Abgasausleitung mit ihren weiteren Vorteilen durchführbar.

In Ausgestaltung der Erfindung ist dabei vorgesehen, dass in Strömungsrichtung vor der Unterdruckkammer eine Leiteinrichtung für das Wasser angeordnet ist, die einen ringförmigen Querschnitt aufweist, so dass sich ein Hohlzylinder-Wasserstrahl bildet. So entsteht die Ausbildung eines Wasserstrahls, die eine besonders günstige Einarbeitung des Abgases in den Wasserstrahl ermöglicht. So ist der Austrag des Abgases sicher möglich und es wird verhindert, dass Wasser und Gas ungemischt in das Umgebungswasser ausgetragen werden.

In weiterer Ausgestaltung der Erfindung ist vorgesehen, dass in Strömungsrichtung vor der Unterdruckkammer eine Leiteinrichtung für das Abgas angeordnet ist, die einen ringförmigen Querschnitt aufweist, so dass auch das Abgas in Form eines Hohlzylinders ausströmt. So entstehen sehr vorteilhaft zwei Mengenströme mit großen Oberflächen, die trotz großer Dichteunterschiede der beiden Medien vermischt ausgetragen werden.

In weiterer Ausgestaltung der Erfindung ist vorgesehen, dass die Leiteinrichtung für das Wasser Leitelemente, insbesondere Schaufeln in Cycloidenform, aufweist, mit denen das Wasser in eine rotierende Bewegung versetzbar ist. So wird widerstandsarm eine vorteilhafte Rotationsbewegung des Wassers erreicht, die, wenn der Abgasstrom durch entsprechende Leitelemente, also insbesondere auch Schaufeln in Cycloidenform, in eine Gegendrehbewegung versetzt wird, die Mischung der beiden Mengenströme entscheidend verbessert und kurz hinter der Leiteinrichtung einen homogenen Abgas-Wasserstrom bildet.

Der dem Umgebungswasser entnommene Wasserstrom wird wahlweise durch eine Radialpumpe oder durch eine Axialpumpe erzeugt. Eine Radialpumpe ist dann angebracht, wenn die Pumpe z.B. auf dem freien Wellenende eines Dieselmotors angeordnet wird, da so, insbesondere vorteilhaft für U-Boote, eine besonders platzsparende Einrichtung entsteht. Eine Axialpumpe kann vorteilhaft verwendet werden, wenn zusätzliche Leitelemente vorgesehen sind, die die Bewegung des Schiffes durch das Wasser ausnutzen und einen Teilstrom entnehmen, der bereits auf Schiffsgeschwindigkeit beschleunigt ist. Außerdem kann eine derartige Axialpumpe unmittelbar vor der Mischeinrichtung angeordnet werden, so dass ein nicht umgelenkter Wasserstrom in die Mischeinrichtung eintritt. Auch die Rotationsbewegung der Axialpumpe kann zur Drallerzeugung genutzt werden, der Installationsaufwand ist jedoch höher als bei der Anordnung einer Radialpumpe auf dem freien Wellenende z.B. eines Dieselmotors.

Als Antriebsleistung der Pumpe für den Wasserstrom reichen in der Regel 20 - 30 KW aus, damit kann für einen Dieselmotor von mehr als 1000 KW bei 5 m Wassertiefe ein Abgasaustritt bei Normaldruck erreicht werden. Die Leistungssteigerung beträgt für diesen Motor aber einige 100 KW.

Als Axialpumpe kommt eine Pumpe mit zentraler Welle, aber auch ein Außenläufer in Frage. Dies ist den jeweiligen Platzverhältnissen am Schiff anzupassen.

In einer besonders bevorzugten Ausgestaltung der Erfindung ist vorgesehen, dass die Mischeinrichtung einen inneren Verdrängungskörper für das zuströmende Gas aufweist. So erhält auch der Gasstrom vorteilhaft eine hohlzylinderförmige Ausführung und gleichzeitig wird ein Zurückströmen des in der Mischeinrichtung gebildeten Gas/Wassergemisches in die Leitelemente für den Wasserstrom und den Gasstrom verhindert. So ergibt sich ein vorteilhaft sicheres Arbeiten sowohl bei der Erzeugung des Unterdrucks als auch bei der Mischung.

Die Gas- und Wasserstromeinführung in die Einrichtung erfolgt vorteilhaft über Koaxialrohre für Gas und Wasser, mit denen die Ringform für den Gas- und den Wasserstrom bereits vorgebildet wird. So ergeben sich besonders günstige Strömungsverhältnisse in der Mischeinrichtung.

Durch eine Kühleinrichtung für das Abgas wird dessen Volumen erheblich herabgesetzt, so dass die erfindungsgemäße Einrichtung relativ klein baut und z.B. einen Außendurchmesser von 250 mm aufweisen kann. So wird insbesondere den Platzanforderungen eines U-Boots Rechnung getragen.

Die erfindungsgemäße Einrichtung weist steuer- und regelbare Absperrmittel mit Kontrolleinrichtungen auf, die vorteilhaft insbesondere mit dem Schiffs- oder mit dem Motorleitsystem verbunden sind. So kann sowohl eine zuverlässige Verriegelungsschaltung für die Absperrmittel gebildet werden als auch der Anfahrdynamik der Verbrennungskraftmaschinen und der Mischeinrichtung und Auslassvorrichtung Rechnung getragen werden. Zusätzlich sind noch Rückschlagklappen, insbesondere mit einer Stellungsüberwachung, vorgesehen, so dass insgesamt die gleiche Sicherheit für ein U-Boot oder ein Überwasserschiff erreichbar ist, die ohne die Verwendung der Einrichtung vorliegt.

Das erfindungsgemäße Verfahren und die erfindungsgemäße Einrichtung ist vorteilhaft für eine Verwendung für U-Boote in Schnorchelfahrt vorgesehen. Die Einrichtung wird bei Verwendung auf U-Booten vorteilhaft auf dem Achterschiff im Nachstrom des Turms oder des Turmunterbaus angeordnet und kann wahlweise in die Außenhülle des U-Boots integriert werden oder aus dieser heraus bewegbar ausgebildet sein. Bei einer Anordnung auf dem Achterschiff im Nachstrom des Turms oder des Turmunterbaus ergibt sich besonders vorteilhaft, dass die Einrichtung keinen zusätzlichen Widerstand erzeugt und sogar in einem Bereich des U-Boots eingesetzt wird, in dem eine turbulente Strömung herrscht, die die Einleitung des gebildeten Zweiphasengemisches in das Umgebungswasser begünstigt.

Die Erfindung wird anhand von Zeichnungen näher erläutert, aus denen, ebenso wie aus den Unteransprüchen, weitere erfinderische Einzelheiten entnehmbar sind.

Im einzelnen zeigen:
- FIGUR 1: einen schematischen Längsschnitt durch eine Abgasmisch- und Unterdruckeinrichtung,
- FIGUR 2: eine 3D-Darstellung der Mischschaufeln mit dem mittleren Verdrängungskörper von der Austrittsseite aus gesehen und
- FIGUR 3: die Geschwindigkeitsverteilung der beiden Mengenströme in der Einrichtung auf berechneter Basis.

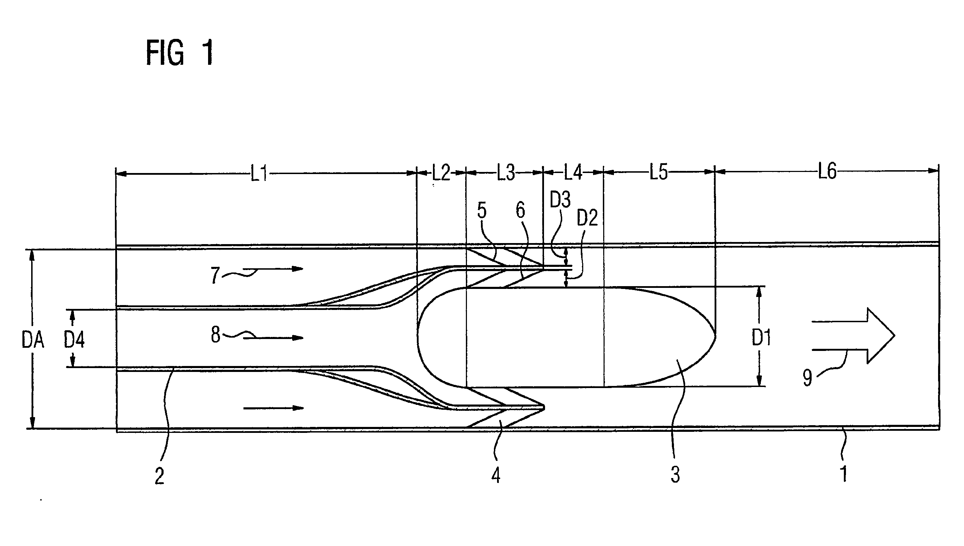

In FIGUR 1 bezeichnet 1 das Gehäuserohr der Abgasausleitungseinrichtung, das gleichzeitig das Einleitungsrohr für das Misch- und Unterdruckerzeugungswasser ist. 2 bezeichnet das Gasrohr sowie 3 den erfindungswesentlich vorteilhaften, mittigen Verdrängungskörper für Gas und Wasser. Um den Verdrängungskörper 3 bildet sich das erfindungsgemäße Unterdruckgebiet auf der Außenseite der Aufweitung 4. Zur Dralleinleitung in den Wasser- und in den Gasstrom sind Leitelemente 5 und 6 vorgesehen, die gleichzeitig eine Halterung für den Verdrängungskörper 3 und den aufgeweiteten Wasserkanal 4 bilden können. Das der Misch- und Unterdruckerzeugungseinrichtung zugeführte Wasser ist durch die Pfeile 7 symbolisiert und das Gas durch den Pfeil 8. Das gebildete Zweiphasengemisch ist durch den Doppelpfeil 9 symbolisiert.

Ganz wesentlich für die vorteilhafte Funktion der Misch- und Unterdruckerzeugungseinrichtung sind die geometrischen Verhältnisse, d.h. die Rohrdurchmesser und Rohrabschnittslängen in der Einrichtung. Aus diesem Grund sind die Einzellängen und die Hauptdurchmesser in FIGUR 1 eingetragen. Die Abmessungen in FIGUR 1 haben die Verhältnisse:
DA = 1,5 - 2,0 D4
L1 = 3 - 4,5 D4
L2 = 0,6 - 0,8 D4
L3 = 0,8 - 1,2 D4
L4 = 0,6 - 1,0 D4
L5 = 1,3 - 1,7 D4
L6 = 1,5 - 3,5 D4
D1 = 1,2 - 1,5 D4
D2 = 0,2 - 0,3 D4
D3 = 0,2 - 0,3 D4
D4 ist der Durchmesser des Abgasrohrs

Die in der Tabelle aufgeführten Verhältnisse sind für ein Abgasrohr von 250 mm Durchmesser berechnet, in dem die Abgase eines typischen, aufgeladenen U-Boot-Diesels in das Umgebungswasser abgeleitet werden. Als typischer Diesel wird ein aufgeladener Diesel mit Abgasturboladern und einer Leistung von 1300 KW angesehen. Die Abgaseinlasstemperatur in die Einrichtung ist nach ihrer erfindungsgemäß vorgesehenen Kühlung 90 Grad C. Bei einer Einleitung des Zweiphasengemisches Gas/Wasser ist bei einer Anordnung der Einrichtung im Nachstrom des U-Boot-Turms oder einer ähnlichen Einrichtung an Bord des U-Boots keine zusätzliche Maßnahme zum guten Übergang des Zweiphasengemisches in das Umgebungswasser notwendig.

Bei einem Einbau an anderer Stelle des U-Boots oder bei einem Einbau in Unterwasserausstoßanlagen von Überwasserschiffen kann noch ein zusätzliches Leitelement zur Erzeugung eines Wasserstroms mit entsprechendem Sog günstig sein.

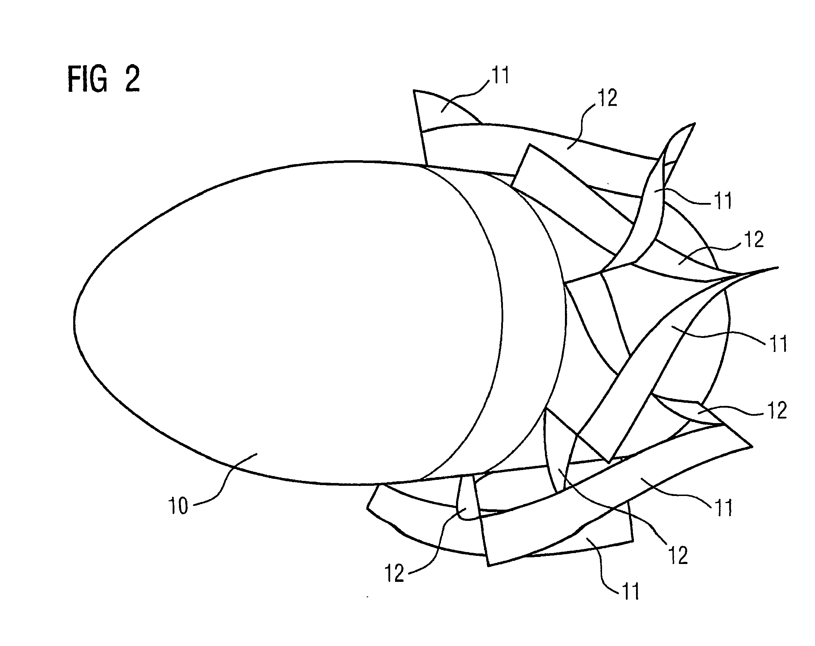

In FIGUR 2 bezeichnet 10 den mittigen Verdrängungskörper und 11 die Drallerzeugungselemente, hier Cycloidalschaufeln, für die Drallerzeugung des Wassers und 12 die weiter innen liegenden Drallerzeugungselemente, auch hier Cycloidalschaufeln, für das Gas. Die Schaufelform ist dabei so gewählt, dass sich ein nur geringer Axialwiderstand ergibt. Der nach hinten verlängerte Verdrängungskörper 10 verhindert eine Rückströmung des Gases und des Wassers in den Bereich der Drallerzeugungselemente und sorgt für eine sichere Funktion der Unterdruck-Mischeinrichtung. Anstelle der Cycloidalform können auch andere Schaufelformen wählbar sein. Dies hängt vom Misch/Widerstandsverhältnis ab, das erreicht werden soll.

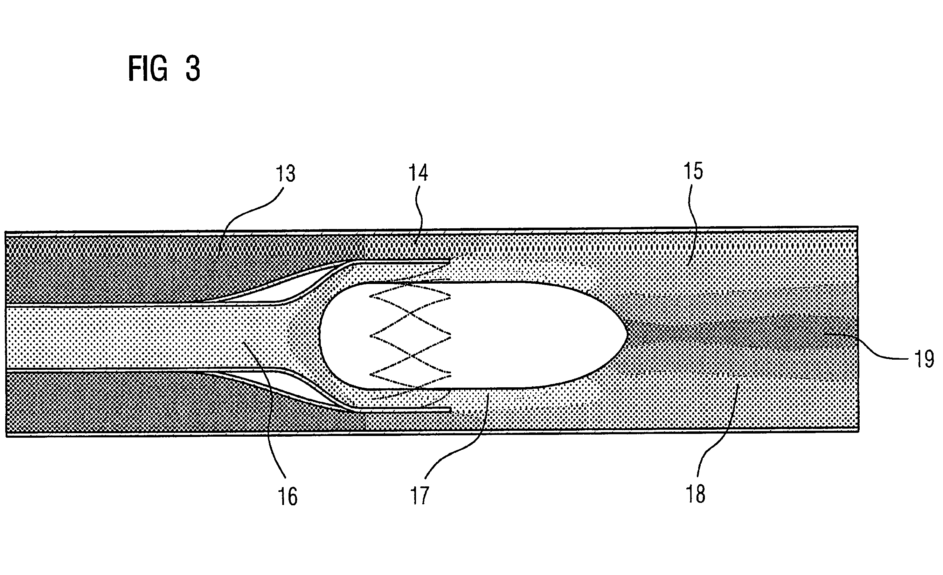

Aus FIGUR 3 sind die unterschiedlichen Geschwindigkeiten der beiden Medien Gas und Wasser in der Ausleitungseinrichtung zu ersehen, wobei die Grautönung die unterschiedlichen Geschwindigkeiten wiedergibt. Im dunklen Bereich 13 ist die Geschwindigkeit des Wassers am geringsten und erhöht sich im Bereich 14, ersichtlich aus dem helleren Grau, bis es schließlich im Bereich 15 zu einem Geschwindigkeitsabfall mit Drucksteigerung kommt. Das einströmende Gas weist im hellen Bereich 16 seine übliche "Auspuff"-Geschwindigkeit auf und wird am Verdrängungskörper ebenfalls hoch beschleunigt. Schließlich ergibt sich im Bereich 18, dem Ausströmbereich aus der Einrichtung, eine relative Angleichung mit einer besonders langsamen Strömung im Abströmbereich des Verdrängungskörpers. In diesem Bereich 15, 18 erfolgt durch Drall eine gute Vermischung, so dass die bei Ejektoren oder Waterjets auftretende Stabilität des Wasserstroms mit Sicherheit nicht gegeben ist. Es ergibt sich vielmehr ein echtes Zweiphasengemisch mit einem Unterdruck für das ausströmende Gas im Bereich 17, durch den die erfindungsgemäß gewünschte Leistungssteigerung von aufgeladenen Dieselmotoren eintritt. 19 bezeichnet den Diffusorbereich, in dem ggf. der Rohrdurchmesser noch vergrößert wird.

Die in den Darstellungen und aus der Tabelle zu FIGUR 1 dargestellten Verhältnisse sind über einen weiten Leistungsbereich von Verbrennungskraftmaschinen anwendbar. Der als Berechnungsgrundlage dienende 1300 KW-Diesel stellt in etwa die Mitte des Anwendungsbereichs dar. Es sind sowohl deutlich größere aufgeladene Dieselmotore als auch kleinere Dieselmotore mit den gleichen Verhältnissen der erfindungsgemäßen Einrichtung betreibbar. Nach unten ist den Leistungen der entsprechenden Verbrennungskraftmaschinen keine Grenze gesetzt. Auch Gasturbinenabgase können ähnlich unter Wasser bei Leistungssteigerung ausgetragen werden.

## Patentansprüche

1. Verfahren zur leistungssteigernden Ausleitung von Abgasen (8) von Verbrennungskraftmaschinen von U-Booten in das Umgebungswasser der U-Boote, wobei die Abgase (8) und ein dem Umgebungswasser der U-Boote entnommener, in einer Pumpeinrichtung erzeugter, Wasserstrom (7) in einem Unterdruckfeld miteinander vermischt werden, wobei der Unterdruck des Unterdruckfeldes durch eine Querschnittsverminderung des Wasserstroms vor der Mischung erzeugt wird,
**dadurch gekennzeichnet, dass** die Querschnittsverminderung derart erfolgt, dass ein beschleunigter Wasserstrom in Form eines Hohlzylinders entsteht, wobei der Hohlzylinder-Wasserstrom durch eine feststehende Einrichtung in eine rotierende Bewegung versetzt wird, z.B. durch feststehende Drallerzeugungsmittel, etwa Schaufeln (5).

2. Verfahren nach Anspruch 1,
**dadurch gekennzeichnet, dass** die Abgase (8) in das Innere des durch eine feststehende Einrichtung erzeugten Hohlzylinder-Wasserstroms eingeführt werden.

3. Verfahren nach Anspruch 1 oder 2,
**dadurch gekennzeichnet, dass** die Abgase (8) auch auf die Außenseite des Hohlzylinder-Wasserstroms geführt werden.

4. Verfahren nach Anspruch 1, 2 oder 3,
**dadurch gekennzeichnet, dass** Abgas (8) in eine dem Hohlzylinder-Wasserstrom entgegengesetzt verlaufende Rotationsbewegung versetzt wird, z.B. durch Drallerzeugungsmittel, z.B. Schaufeln (6).

5. Verfahren nach einem oder mehreren der vorhergehenden Ansprüche, **dadurch gekennzeichnet,**
**dass** der Abgasstrom in die Form eines Hohlzylinders gebracht wird, z.B. durch einen Verdrängungskörper (3) im Abgasstrom.

6. Verfahren nach einem oder mehreren der vorhergehenden Ansprüche, **dadurch gekennzeichnet, dass** der Abgasstrom (8) zur Volumenverringerung vor der Einführung in das Unterdruckfeld gekühlt wird, z.B. durch Wassereinspritzung.

7. Verfahren nach einem oder mehreren der vorhergehenden Ansprüche, **dadurch gekennzeichnet, dass** das Abgas (8) im Anschluss an die Mischung mit dem Wasserstrom (7) und nach Passieren des Unterdruckfeldes eine Drucksteigerung erfährt, z.B. in einem erweiterten Abgasaustrittsrohr mit Diffusoreffekt.

8. Einrichtung zur leistungssteigernden Ausleitung von Abgasen (8) von Verbrennungskraftmaschinen von U-Booten in das Umgebungswasser der U-Boote, wobei die Einrichtung als feststehender Abgas-Wasser-Mischer ausgebildet ist, der eine Unterdruckkammer aufweist, in der die Abgase (8) und ein dem Umgebungswasser der U-Boote entnommener, in einer Pumpeinrichtung erzeugter, Wasserstrom (7) miteinander vermischt werden, wobei die Einrichtung über Mittel zur Erzeugung eins Unterdruckfeldes in der Unterdruckkammer verfügt, die durch eine Querschnittsverminderung des Wasserstroms realisiert sind, die in Strömungsrichtung vor der Mischung liegt, und wobei die Einleitung der Abgase (8) in den Abgas-Wasser-Mischer durch ein feststehendes Abgasrohr (2) erfolgt
**gekennzeichnet durch** eine feststehende Einrichtung, z. B. feststehende Drallerzeugungsmittel, etwa Schaufeln (5), und Mittel zum Formen eines Hohlzylinder-Wasserstroms wobei besagte Querschnittsverminderung den Hohlzylinder-Wasserstrom beschleunigt und die feststehende Einrichtung den Hohlzylinder-Wasserstrom in eine rotierende Bewegung versetzt.

9. Einrichtung nach Anspruch 8,
**dadurch gekennzeichnet, dass** in Strömungsrichtung vor der Unterdruckkammer eine Leiteinrichtung (4) für das Mischwasser angeordnet ist, die einen ringförmigen Querschnitt aufweist, so dass sich ein Hohlzylinder-Wasserstrahl bildet.

10. Einrichtung nach Anspruch 8 oder 9,
**dadurch gekennzeichnet, dass** in Strömungsrichtung vor der Unterdruckkammer eine Leiteinrichtung für das Abgas angeordnet ist, die einen ringförmigen Querschnitt aufweist, so dass das Abgas in Form eines Hohlzylinders ausströmt.

11. Einrichtung nach Anspruch 10,
**dadurch gekennzeichnet, dass** die Leiteinrichtung für das Wasser Leitelemente (5), insbesondere Leitschaufeln in Cycloidenform, aufweist, mit denen das Wasser in eine rotierende Bewegung versetzbar ist.

12. Einrichtung nach Anspruch 11,
**dadurch gekennzeichnet, dass** die Leiteinrichtung für den Abgasstrom Leitelemente (6), insbesondere Schaufeln (12) in Cycloidenform, aufweist, mit denen das Abgas in eine rotierende, insbesondere in eine gegenrotierende Bewegung zum Wasserstrom versetzbar ist.

13. Einrichtung nach einem oder mehreren der Ansprüche 8 bis 12, **dadurch gekennzeichnet, dass** sie eine Radialpumpe zur Erzeugung des Wasserstroms aufweist.

14. Einrichtung nach einem oder mehreren der Ansprüche 8 bis 12, **dadurch gekennzeichnet, dass** sie eine Axialpumpe zur Erzeugung des Wasserstrahls aufweist.

15. Einrichtung nach einem oder mehreren der Ansprüche 8 bis 14, **dadurch gekennzeichnet, dass** sie eine Leitung für eine Zumischung des von der Verbrennungskraftmaschine benötigten Kühlwassers zum Wasserstrom in der Einrichtung aufweist.

16. Einrichtung nach einem oder mehreren der Ansprüche 8 bis 15, **dadurch gekennzeichnet, dass** sie einen inneren Verdrängungskörper (3, 10) für Abgas und Wasser aufweist, der mittig in der Einrichtung angeordnet ist.

17. Einrichtung nach einem oder mehreren der Ansprüche 8 bis 16, **dadurch gekennzeichnet, dass** sie koaxiale Leitrohre (1, 2) für den Abgas- und den Wasserstrom aufweist, wobei das Abgas innen und das Wasser außen geführt werden.

18. Einrichtung nach einem oder mehreren der Ansprüche 8 bis 17, **dadurch gekennzeichnet, dass** sie eine Kühleinrichtung für das zugeführte Abgas aufweist.

19. Einrichtung nach einem oder mehreren der Ansprüche 8 bis 18, **dadurch gekennzeichnet, dass** sie Absperrmittel und eine Stellungs-, Kontroll- und Steuereinrichtung für das zugeführte Abgas und das Wasser aufweist, insbesondere mit einer Kontroll- und Steuereinrichtung, die mit einem Schiffs- oder Motorleitsystem verbunden ist.

20. Einrichtung nach Anspruch 19,
**dadurch gekennzeichnet, dass** die Kontrolleinrichtung eine Verriegelungsschaltung für den Stillstandsfall und einen Anfahrmodus mit geregelter Bewegung der Absperrmittel aufweist.

21. Einrichtung nach Anspruch 19 oder 20,
**dadurch gekennzeichnet, dass** sie Rückschlagklappen, insbesondere mit Stellungsüberwachung, für die Abgas- oder Wasserströme aufweist.

22. Einrichtung nach einem oder mehreren der Ansprüche 8 bis 21, **dadurch gekennzeichnet, dass** sie für U-Boote in Schnorchelfahrt zur Leistungserhöhung der Ladediesel verwendet wird.

23. Einrichtung nach Anspruch 22,
**dadurch gekennzeichnet, dass** sie auf dem Achterschiff, insbesondere im Strömungslee des Turms oder der Turmbasis, verwendet wird.

24. Einrichtung nach Anspruch 22
**dadurch gekennzeichnet, dass** sie im Turm des U-Boots verwendet wird.

25. Einrichtung nach einem oder mehreren der vorhergehenden Ansprüche,
**dadurch gekennzeichnet, dass** sie mit einem einstellbaren Ausströmdiffusor zur Anpassung an unterschiedliche Abgas-Ausleitungstiefen verwendet wird.

## Claims

1. Method for performance-improving emission of exhaust gases (8) from internal combustion engines in submarines into the water surrounding the submarines,
with the exhaust gases (8) and a water flow (7) which is taken from the water surrounding the submarines and which is produced in a pump device being mixed with one another in a reduced-pressure field, with the reduced pressure for the reduced-pressure field being produced by a reduction in the cross-sectional area of the water flow before mixing,
**characterized in that** the cross-sectional area is reduced in such a manner as to produce an accelerated water flow in the form of a hollow cylinder, the hollow-cylindrical water flow being made to rotate via a stationary device, for example by means of stationary swirl-producing means, such as blades (5).

2. Method according to Claim 1,
**characterized in that** the exhaust gases (8) are introduced into the interior of the hollow-cylindrical water flow produced by a stationary device.

3. Method according to Claim 1 or 2,
**characterized in that** the exhaust gases (8) are also passed to the outside of the hollow-cylindrical water flow.

4. Method according to Claim 1, 2 or 3,
**characterized in that** the exhaust gas (8) is caused to rotate in the opposite direction to the hollow-cylindrical water flow, for example by swirl-producing means, for example blades (6).

5. Method according to one or more of the preceding claims, **characterized in that** the exhaust-gas flow is caused to form a hollow-cylindrical shape, for example by means of a displacement body (3) in the exhaust-gas flow.

6. Method according to one or more of the preceding claims, **characterized in that** the exhaust-gas flow (8) is cooled, for example by means of water injection, in order to reduce its volume before being introduced into the reduced-pressure field.

7. Method according to one or more of the preceding claims, **characterized in that** the exhaust gas (8) is subject to a pressure increase, for example in a widened exhaust-gas outlet pipe with a diffuser effect, after it has been mixed with the water flow (7) and has passed through the reduced-pressure field.

8. Device for performance-improving emission of exhaust gases (8) from internal combustion engines in submarines into the water surrounding the submarines, the device being in the form of a stationary exhaust-gas/water mixer and having a reduced-pressure chamber in which the exhaust gases (8) and a water flow (7) which is removed from the surrounding water of the submarines and is generated in a pump device are mixed with one another, the device having means for generating a reduced-pressure field in the reduced-pressure chamber, which means are realized by a cross-sectional reduction of the water flow, which reduction lies in front of the mixing in the flow direction, and the exhaust gases (8) being introduced into the exhaust-gas/water mixer by a stationary exhaust-gas pipe (2), **characterized by** a stationary device, for example stationary swirl producing means, for instance blades (5), and means for shaping a hollow-cylindrical water flow, the said cross-sectional reduction accelerating the hollow-cylindrical water flow and the stationary device setting the hollow-cylindrical water flow into a rotating movement.

9. Device according to Claim 8,
**characterized in that** a guidance device (4) for the mixing water is arranged upstream of the reduced-pressure chamber in the flow direction and has an annular cross section so as to form a hollow-cylindrical waterjet.

10. Device according to Claim 8 or 9,
**characterized in that** a guidance device for the exhaust gas is arranged upstream of the reduced-pressure chamber in the flow direction and has an annular cross section, so that the exhaust gas flows out in the form of a hollow cylinder.

11. Device according to Claim 10,
**characterized in that** the guidance device for the water has guidance elements (5), in particular guide vanes with a cycloid shape, which can cause the water to rotate.

12. Device according to Claim 11,
**characterized in that** the guidance device for the exhaust-gas flow has guidance elements (6), in particular blades (12) with a cycloid shape, by means of which the exhaust gas can be caused to carry out a rotating movement, in particular a rotating movement in the opposite direction to the water flow.

13. Device according to one or more of Claims 8 to 12,
**characterized in that** the device has a radial pump for production of the water flow.

14. Device according to one or more of Claims 8 to 12,
**characterized in that** the device has an axial pump for production of a waterjet.

15. Device according to one or more of Claims 8 to 14,
**characterized in that** the device has a line for mixing the cooling water that is required by the internal combustion engine with the water flow in the device.

16. Device according to one or more of Claims 8 to 15,
**characterized in that** the device has an inner displacement body (3, 10) for exhaust gas and water, which is arranged centrally in the device.

17. Device according to one or more of Claims 8 to 16,
**characterized in that** the device has coaxial guidance tubes for the exhaust-gas flow and the water flow, with the exhaust gas being guided on the inside and the water on the outside.

18. Device according to one or more of Claims 8 to 17,
**characterized in that** the device has a cooling device for the exhaust gas that is supplied.

19. Device according to one or more of Claims 8 to 18,
**characterized in that** the device has shut-off means and a position-monitoring and control device for the supplied exhaust gas and the water, in particular with a monitoring and control device which is connected to a marine-vessel or engine control system.

20. Device according to Claim 19,
**characterized in that** the monitoring device has a locking circuit for shutdown and a starting mode with regulated movement of the shut-off means.

21. Device according to Claim 19 or 20,
**characterized in that** the device has non-return valves, in particular with position monitoring, for the exhaust-gas or water flows.

22. Device according to one or more of Claims 8 to 21,
**characterized in that** the device is used to increase the performance of the boosted diesels for submarines when snorkeling.

23. Device according to Claim 22,
**characterized in that** the device is used at the stern of the marine vessel, in particular in the flow lee of the fin or of the fin base.

24. Device according to Claim 22,
**characterized in that** the device is used in the fin of the submarine.

25. Device according to one or more of the preceding claims,
**characterized in that** the device is used with an adjustable outlet-flow diffuser for matching the different exhaust-gas emission depths.

## Revendications

1. Procédé pour évacuer, en augmentant la puissance, des gaz d'échappement ( 8 ) de moteurs à combustion interne de sous-marins dans l'eau ambiante des sous-marins, les gaz d'échappement ( 8 ) et un courant ( 7 ) d'eau prélevé de l'eau ambiante du sous-marin et produit dans un dispositif de pompage étant mélangés entre eux dans un champ de dépression, la dépression du champ de dépression étant produite par une diminution de la section transversale du courant d'eau avant le mélange,
**caractérisé en ce que** l'on effectue la diminution de section transversale, de manière à créer un courant d'eau accéléré sous la forme d'un cylindre creux, un mouvement de rotation étant imprimé au courant d'eau en cylindre creux par un dispositif fixe, par exemple par un moyen fixe de production de tourbillon, par exemple par des aubes ( 5 ).

2. Procédé suivant la revendication 1,
**caractérisé en ce que** l'on introduit les gaz d'échappement ( 8 ) à l'intérieur du courant d'eau en cylindre creux produit par un dispositif fixe.

3. Procédé suivant la revendication 1 ou 2,
**caractérisé en ce que** l'on fait passer les gaz d'échappement ( 8 ) également sur la face extérieure du courant d'eau en cylindre creux.

4. Procédé suivant la revendication 1, 2 ou 3,
**caractérisé en ce que** l'on donne aux gaz d'échappement ( 8 ) un mouvement de rotation en sens opposé au courant d'eau en cylindre creux, par exemple par un moyen de production de tourbillon, par exemple par des aubes ( 6 ).

5. Procédé suivant l'une ou plusieurs des revendications précédentes, **caractérisé en ce que** l'on met le courant de gaz d'échappement sous la forme d'un cylindre creux, par exemple par un corps ( 3 ) de refoulement dans le courant de gaz d'échappement.

6. Procédé suivant l'une ou plusieurs des revendications précédentes, **caractérisé en ce que** l'on refroidit le courant ( 8 ) de gaz d'échappement pour diminuer le volume avant l'introduction dans le champ de dépression, par exemple par une pulvérisation d'eau.

7. Procédé suivant l'une ou plusieurs des revendications précédentes, **caractérisé en ce que** les gaz d'échappement ( 8 ) subissent, à la suite du mélange avec le courant ( 7 ) d'eau et après avoir passé dans le champ de dépression, une augmentation de la pression, par exemple dans un tuyau élargi de sortie des gaz d'échappement ayant un effet de diffuseur.

8. Dispositif d'évacuation, avec augmentation de puissance, des gaz d'échappement ( 8 ) de moteurs à combustion interne de sous-marins dans l'eau ambiante des sous-marins, le dispositif étant constitué sous la forme d'un mélangeur fixe de gaz d'échappement et d'eau, qui a une chambre de dépression dans laquelle les gaz d'échappement ( 8 ) et un courant ( 7 ) d'eau prélevé de l'eau ambiante des sous-marins et produit dans un dispositif de pompage sont mélangés entre eux, le dispositif disposant de moyens de production d'un champ de dépression dans la chambre de dépression, qui sont réalisés par une diminution de la section transversale du courant d'eau qui se trouve en amont du mélange dans le sens du courant et dans lequel l'envoi des gaz ( 8 ) d'échappement dans le mélangeur de gaz d'échappement et d'eau s'effectue par un tuyau ( 2 ) fixe pour les gaz d'échappement,
**caractérisé par** un dispositif fixe, par exemple par un moyen fixe de production de tourbillon, par exemple des aubes ( 5 ), et par un moyen de formation d'un courant d'eau en cylindre creux, la diminution de la section droite du courant d'eau en cylindre creux étant accélérée et le dispositif fixe imprimant un mouvement de rotation au courant d'eau en cylindre creux.

9. Dispositif suivant la revendication 8,
**caractérisé en ce qu'**en amont dans le sens du courant de la chambre de dépression est monté un dispositif ( 4 ) de conduite de l'eau de mélange, dispositif qui a une section transversale annulaire, de manière à former un jet d'eau en cylindre creux.

10. Dispositif suivant la revendication 8 ou 9,
**caractérisé en ce qu'**en amont dans le sens du courant de la chambre de dépression, est monté un dispositif de conduite des gaz d'échappement, dispositif qui a une section transversale annulaire, de manière à ce que les gaz d'échappement sortent sous la forme d'un cylindre creux.

11. Dispositif suivant la revendication 10,
**caractérisé en ce que** le dispositif de conduite de l'eau a des éléments ( 5 ) de conduite, notamment des aubes directrices sous forme de cycloïdes, par lesquels il peut être imprimé à l'eau un mouvement de rotation.

12. Dispositif suivant la revendication 11,
**caractérisé en ce que** le dispositif de conduite du courant de gaz d'échappement a des éléments ( 6 ) de conduite, notamment des aubes ( 12 ) sous forme de cycloïdes, par lesquels il peut être imprimé aux gaz d'échappement un mouvement de rotation, notamment en sens inverse du courant d'eau.

13. Dispositif suivant l'une ou plusieurs des revendications 8 à 12, **caractérisé en ce qu'**il comprend une pompe radiale pour produire le courant d'eau.

14. Dispositif suivant l'une ou plusieurs des revendications 8 à 12, **caractérisé en ce qu'**il comprend une pompe axiale pour produire le jet d'eau.

15. Dispositif suivant l'une ou plusieurs des revendications 8 à 14, **caractérisé en ce qu'**il a un conduit pour un mélange de l'eau de refroidissement nécessaire au moteur à combustion interne au courant d'eau dans le dispositif.

16. Dispositif suivant l'une ou plusieurs des revendications 8 à 15, **caractérisé en ce qu'**il a un corps ( 3, 10 ) intérieur de refoulement des gaz d'échappement et de l'eau, qui est disposé au milieu dans le dispositif.

17. Dispositif suivant l'une ou plusieurs des revendications 8 à 16, **caractérisé en ce qu'**il a des tuyaux ( 1, 2 ) de conduite axiale du courant des gaz d'échappement et du courant d'eau, les gaz d'échappement passant à l'intérieur et l'eau à l'extérieur.

18. Dispositif suivant l'une ou plusieurs des revendications 8 à 17, **caractérisé en ce qu'**il a un dispositif de refroidissement des gaz d'échappement amenés.

19. Dispositif suivant l'une ou plusieurs des revendications 8 à 18, **caractérisé en ce qu'**il a des moyens d'arrêt et un dispositif de réglage, de contrôle et de commande des gaz d'échappement amenés, en ayant notamment un dispositif de contrôle et de commande qui est relié au système de direction du bateau ou du moteur.

20. Dispositif suivant la revendication 19,
**caractérisé en ce que** le dispositif de contrôle a un circuit de verrouillage pour le cas d'arrêt et un mode de démarrage à mouvement réglé du moyen d'arrêt.

21. Dispositif suivant la revendication 19 ou 20,
**caractérisé en ce qu'**il a des volets anti-retour, notamment à contrôle de position, pour les courants de gaz d'échappement ou d'eau.

22. Dispositif suivant l'une ou plusieurs des revendications 8 à 21, **caractérisé en ce qu'**il est utilisé pour des sous-marins en plongée pour augmenter la puissance du diesel de suralimentation.

23. Dispositif suivant la revendication 22,
**caractérisé en ce qu'**il est utilisé à la poupe, notamment du côté sous le vent de la tourelle ou à la base de la tourelle.

24. Dispositif suivant la revendication 22,
**caractérisé en ce qu'**il est utilisé dans la tourelle du sous-marin.

25. Dispositif suivant l'une ou plusieurs des revendications précédentes,
**caractérisé en ce qu'**il est utilisé avec un diffuseur de sortie réglable pour s'adapter à des profondeurs d'évacuation de gaz d'échappement différentes.
